# EUROPEAN PATENT APPLICATION

(11) **EP 4 570 063 A1**
(43) Date of publication of application: **18.06.2025**
(21) Application number: 24218759.9
(22) Date of filing: 10.12.2024
(51) Int. Cl.: A01J 11/16, F04B 11/00, F16L 55/04, F16L 55/052, F16L 55/053

(54) **A DAMPER ARRANGEMENT FOR A HOMOGENIZER**

(30) Priority: 11.12.2023 EP 23215573; 29.02.2024 EP 24160645
(71) Applicant: Tetra Laval Holdings & Finance S.A., 1009 Pully (CH)
(72) Inventor: Leufstedt, Max, 22186 Lund (SE); Karlsson, Christer, 22186 Lund (SE)
(74) Representative: Tetra Pak - Patent Attorneys SE

(57) **Abstract**

A damper arrangement (100) for reducing pressure pulsations in a fluid line (102) filled with a liquid product (P). The damper arrangement has a vessel (104) having an inner chamber (116), an upper end valve (132) that connects an upper end (106) of the inner chamber (116) to a gaseous media supply (135), a lower end valve (128) that connects a lower end (108) of the inner chamber (116) to a liquid output (130), and a line connecting valve (126) that connects the lower end (108) of the inner chamber (116) to the fluid line. The valves are operable to drain the inner chamber from liquid product and form a pressure absorbing gaseous pocket (109) inside the inner chamber. The vessel comprises a jacket (110) that has a liquid inlet (112) and a liquid outlet (114) for passing the liquid product (P) through the jacket.

## Description

### Technical Field

The invention relates to liquid food processing. More particularly, it is related to a damper arrangement for reducing pressure pulsations in a fluid line, to a homogenizer arrangement equipped with such damper arrangement, and methods for operating the damper arrangement and a homogenizer arrangement.

### Background

Homogenizers are widely used in liquid food processing to make products like milk more homogeneous by reducing fat globules, and to create stable emulsions in oil and water mixtures, enhancing texture, mouthfeel, and consistency. High-pressure homogenizers, featuring piston pumps and homogenization valves, commonly pressurize food products to above 200 bar. However, this process can generate pressure pulsations, risking damage to the homogenizer and other equipment. To mitigate this, dampers with air cushions are used to absorb these pulsations, preventing equipment damage. Recently, automatic dampers with air re-fill mechanisms and cleaning-in-place (CIP) systems have been introduced to reduce manual maintenance. Despite these advancements, there is still a need for further improvements in damper operations to achieve even more efficient food processing lines that incorporate homogenizers.

### Summary

It is an object of the invention to at least partly overcome one or more of the above-identified limitations of the prior art. One such object is to provide a simple yet efficient damper arrangement that is capable of reducing pressure pulsations in a fluid line filled with a liquid product.

One or more of these objectives, as well as further objectives that may appear from the description below, are at least partly achieved by arrangements and methods according to the following aspects.

A first aspect relates to a damper arrangement for reducing pressure pulsations in a fluid line filled with a liquid product. The damper arrangement comprises: a vessel having an inner chamber; an upper end valve that connects an upper end of the inner chamber to a gaseous media supply; a lower end valve that connects a lower end of the inner chamber to a liquid output; and a line connecting valve that connects the lower end of the inner chamber to the fluid line. The upper end valve, the lower end valve and the line connecting valve are operable to drain the inner chamber from liquid product and form a pressure absorbing gaseous pocket inside the inner chamber. The vessel comprises a jacket that has a liquid inlet and a liquid outlet for passing the liquid product through the jacket.

As used herein, "pressure pulsations" refers to fluctuations or variations in the pressure level within the fluid line that transports the liquid product. These pulsations are essentially rapid changes in pressure above and below the system's average or nominal pressure. They can be caused by various factors, including the operation of pumps (such as a homogenizer), valves opening and closing, changes in flow velocity, or any other disruptions in the fluid flow.

Mitigating pressure pulsations offers significant benefits, including reducing vibration and noise, enhancing system efficiency, and preventing equipment damage. Specifically, minimizing pulsations helps prevent system components from vibrating, which can cause noise and lead to component fatigue failure. It also stabilizes pressure fluctuations, thus improving fluid transport efficiency, reducing energy consumption, and enhancing pump performance. Furthermore, it alleviates the stress on the system, minimizing wear and tear on seals and gaskets, and preventing structural damage to pipes and vessels.

As user herein, "upper end valve" refers to a valve that is in fluid communication with an upper end of the inner chamber, while "lower end valve" refers to a valve that is in fluid communication with a lower end of the inner chamber. The "upper end valve" can thus be positioned below the "lower end valve" in terms of vertical alignment, meaning the spatial orientation of the valves relative to each other is not constrained to their naming convention.

As used herein, "fluid communication" refers to the configuration or arrangement that allows fluids (liquids or gases) to flow between two or more components without obstructions. It implies that there are no barriers preventing the fluid from transferring and that the components are connected in a way that supports the intended flow dynamics.

As used herein "upper end of the inner chamber" refers to an end of the chamber that has a shorter path, or fluid channel, to the "upper end valve", as compared to the "lower end of the inner chamber". As used herein "lower end of the inner chamber" refers to an end of the chamber that has a shorter path, or fluid channel, to the "lower end valve", as compared to the "upper end of the inner chamber".

As used herein, "operable to drain" may refer to that the upper end valve, the lower end valve and the line connecting valve are not only capable of draining the inner chamber and forming a pressure absorbing gaseous pocket, but are purposely designed and arranged to do so. Thus, the valves cannot be understood as merely suitable for draining product and forming a pressure absorbing gaseous pocket. Rather, they are specifically and intentionally designed to do so.

As used herein "jacket " refers to a casing or covering that surrounds the chamber, creating a space between the jacket and the chamber itself. This jacket and the space are designed to allow a liquid or fluid to flow through it, allowing the jacket to be used for heating the chamber.

In some embodiments, the damper arrangement comprises a control device that is communicatively connected to the upper end valve, the lower end valve and the line connecting valve. The control device is configured to control: the line connecting valve to close; the upper end valve and the lower end valve to open, such that liquid product is drained from the inner chamber while gaseous media enters the inner chamber; the upper end valve and the lower end valve to close; and the line connecting valve to open, for fluidly connecting the liquid product in the fluid line with gaseous media in the inner chamber.

In some embodiments, the liquid inlet of the jacket is connected to the fluid line for letting liquid product into the jacket.

In some embodiments, the liquid outlet of the jacket is connected to the fluid line for letting liquid product out from the jacket.

In some embodiments, the jacket is an integral part of the fluid line. As used herein, "integral part" then means that the jacket is a necessary component of the fluid line's function to convey liquid. Thus, if the liquid does not pass the jacket, it cannot be conveyed through the fluid line either.

In some embodiments, the jacket and the fluid line form a common fluid conduit interior channel. As used herein, "common fluid conduit interior channel" refers to a shared pathway or passage designed for the movement or flow of the liquid product. This channel is an integral part of the damper arrangement's and the fluid line's structure, enabling the transport of the liquid product. It implies that both the jacket and the fluid line contribute to creating a unified pathway through which the liquid product can flow.

In some embodiments, the common fluid conduit interior channel is uninterrupted. As used herein, "uninterrupted" refers to a continuous, seamless pathway or channel through which product flows without any breaks, blockages, obstacles, or changes in direction that could seriously impede or disrupt the flow. An uninterrupted channel ensures a steady, consistent flow of liquid, facilitating efficient transport from one point to another. This design feature facilitates optimal flow rates, prevents turbulence, and ensures that the liquid's properties remain consistent throughout its passage. "Uninterrupted" may mean that valves, pumps and heat providing arrangements are absent in the common fluid conduit interior channel.

In some embodiments, the lower end valve and the line connecting valve are formed as a unified valve. This means that the line connecting valve and the lower end valve must not necessarily be formed as individual valves, but may have the shape of one valve, such as a three-way valve, that selectively can connect the lower end of the inner chamber to the liquid output respectively to the fluid line. Thus, as used herein, the line connecting valve and the lower valve may be understood as embodied as individual valves, and/or as a common valve unit.

In some embodiments, the damper arrangement comprises a sensor connected to the inner chamber. The sensor is arranged to generate a signal indicative of a level of liquid product that is present inside the chamber.

A second aspect relates to a homogenizer arrangement that comprises a damper arrangement according to the first aspect, a homogenizer, and a fluid line. The damper arrangement and the homogenizer are connected to the fluid line for passing liquid product through the jacket of the damper arrangement and through the homogenizer.

In some embodiments, the damper arrangement is a first damper arrangement, and the homogenizer arrangement comprises a second damper arrangement according to the first aspect. The first damper arrangement is connected to the fluid line downstream the homogenizer, and the second damper arrangement is connected to the fluid line upstream the homogenizer for passing liquid product through the jacket of the second damper arrangement. Thus, the first and second damper are similar or may even be identical. The difference between them then lies in how they are connected to the fluid line relative to the homogenizer.

In some embodiments, the homogenizer is configured to receive liquid product from the fluid line, and is arranged to operate at a pressure of at least 200 bar for homogenizing the liquid product, while simultaneously the upper end valve, the lower end valve and the line connecting valve are controlled such that liquid product is drained from the inner chamber while gaseous media enters the inner chamber. This implies that the inner chamber can be drained at the same time as the homogenizer is operated for homogenizing the liquid product.

A third aspect relates to a method of operating a damper arrangement according to the first aspect. The method comprises closing the line connecting valve; opening the upper end valve and the lower end valve, such that liquid product is drained from the inner chamber while gaseous media enters the inner chamber; closing the upper end valve and the lower end valve; and opening the line connecting valve, for fluidly connecting the liquid product in the fluid line with gaseous media in the inner chamber.

Another aspect, closely associated with the third aspect, relates to a method of operating a damper arrangement that is connected to a fluid line. The method comprises: passing liquid product through a fluid line while providing fluid communication between the fluid line and an inner chamber of the damper arrangement; blocking the fluid communication between the fluid line and the inner chamber; providing fluid communication between an upper end of the inner chamber and a gaseous media supply; providing fluid communication between a lower end of the inner chamber and a liquid output, such that liquid product is drained from the inner chamber while gaseous media enters the inner chamber; and passing the liquid product through a jacket that at least partially surrounds the inner chamber.

The passing of the liquid product through the jacket may be performed simultaneously with performing the fluid communications that drains liquid product from the inner chamber.

A fourth aspect relates to a method of operating a homogenizer arrangement according to the second aspect. The method comprises: passing liquid product through the homogenizer; and passing the liquid product through the damper arrangement.

Another aspect, closely associated with the fourth aspect, relates to a method of operating a homogenizer arrangement that comprises a damper arrangement, a fluid line and a homogenizer for homogenizing a liquid product. The method comprises: passing the liquid product through the homogenizer; passing the liquid product through the fluid line while providing fluid communication between the fluid line and an inner chamber of the damper arrangement; blocking said fluid communication between the fluid line and the inner chamber; providing fluid communication between an upper end of the inner chamber and a gaseous media supply; providing fluid communication between a lower end of the inner chamber and a liquid output, to thereby drain liquid product from the inner chamber such that gaseous media enters the inner chamber; and passing the liquid product through a jacket that at least partially surrounds the inner chamber.

In some embodiments, liquid product is continuously and simultaneously passed through the homogenizer and the jacket of the damper arrangement, such that the liquid product is homogenized.

In some embodiments, the liquid product is continuously passed through the homogenizer and the damper arrangement, such that the liquid product is homogenized, while the damping effect offered by the damper arrangement is provided.

As used herein, "continuously passed" refers to the liquid product being fed as a stream of liquid product that continuously flows through both the homogenizer and the jacket of the damper arrangement during the same period of time.

In some embodiments, the method according to the fourth aspect comprises, while passing liquid product through the homogenizer and operating the homogenizer at a pressure of at least 200 bar for homogenizing the liquid product: closing the line connecting valve; opening the upper end valve and the lower end valve, such that liquid product is drained from the inner chamber while gaseous media enters the inner chamber; closing the upper end valve and the lower end valve; and opening the line connecting valve, for fluidly connecting the liquid product in the fluid line with gaseous media in the inner chamber.

Features, advantages and embodiments described for a certain aspect apply, i.e. may be implemented, for the other aspects described herein. Further objectives, features, aspects and advantages of the invention will appear from the following detailed description as well as from the drawings.

### Drawings

Fig. 1 is illustrates a homogenizer arrangement that has two damper arrangements, a homogenizer and a fluid line.
Fig. 2 is a flowchart illustrating a method for operating a damper arrangement.
Fig. 3 is a flowchart illustrating a method for operating a homogenizer arrangement.

### Description

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements.

Where possible, any of the advantages, features, functions, devices, and/or operational aspects of any of the embodiments described and/or contemplated herein may be included in any of the other embodiments described and/or contemplated herein, and/or vice versa. In addition, where possible, any terms expressed in the singular form herein are meant to also include the plural form and/or vice versa, unless explicitly stated otherwise. Accordingly, the terms "a" and/or "an" shall mean "at least one" or "one or more", even though the phrase "one or more" or "at least one" is also used herein. The terms "multiple", "plural" and "plurality" are intended to imply provision of two or more elements. The term "and/or" includes any and all combinations of one or more of the associated listed elements. Although the terms first, second, etc. may be used herein to describe various elements, these elements should not be limited by these terms. These terms are only used to distinguish one element from another. For example, a first element could be termed a second element, and, similarly, a second element could be termed a first element, without departing the scope of the present disclosure.

Well-known functions or constructions may not be described in detail for brevity and/or clarity. Unless otherwise defined, all terms (including technical and scientific terms) used herein have the same meaning as commonly understood by one of ordinary skill in the art to which this disclosure belongs.

Like reference signs refer to like elements throughout.

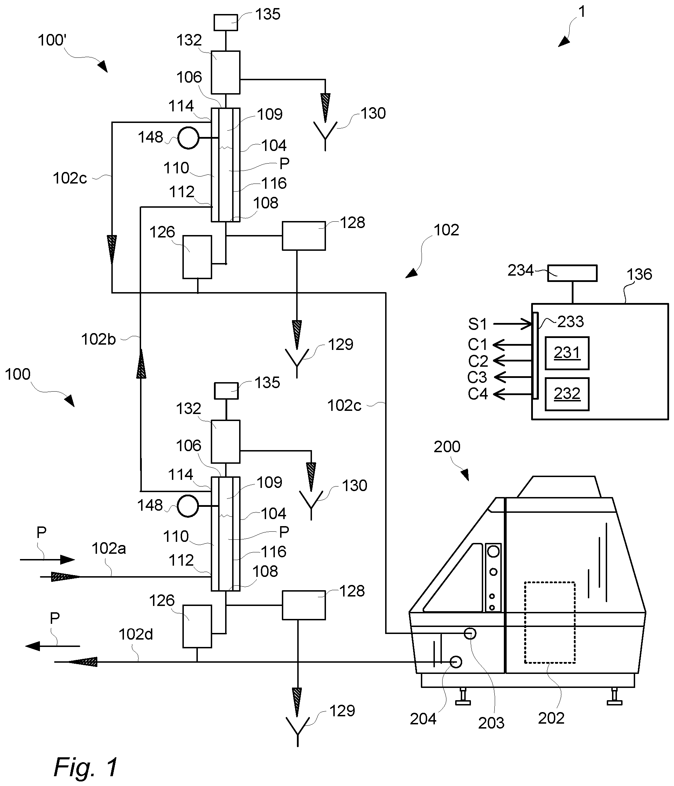

Fig. 1 schematically illustrates a damper arrangement 100 by way of example. The damper arrangement 100 has a vessel 104, which may have the form of a vertically arranged pipe, sometimes referred to as an upright tube, that is fluidly connected to a fluid line 102. The fluid line 102 may be a conventional pipe arranged to feed a liquid product P to an inlet 203 of a homogenizer 200, and to receive the liquid product P via an outlet 204 of the homogenizer 200. The liquid product P may be a liquid food product, such as milk, cream, juice, plant based products, or any other food product for which homogenization is used in the production process.

The homogenizer 200 is a conventional homogenizer that has a piston pump 202 that is operable to feed the liquid product P through a gap at a pressure of at least 200 bar. This effectively homogenizes the liquid product P. In this process, it is common that pressure fluctuations are created in the fluid line 102. The damper arrangement 100 reduces such pressure fluctuations.

The damper arrangement 100 has an inner chamber 116 and a line connecting valve 126 that connects a lower end 108 of the inner chamber 116 to the fluid line 102. The damper arrangement 100 has also a lower end valve (first valve) 128 that connects a lower end 108 of the inner chamber 116 to a first liquid output 129, and has an upper end valve (second valve) 132 that connects an upper end 106 of the inner chamber 116 to a gaseous media supply 135. The first liquid output 129 may be a drain that can receive liquid product P that is emptied from the inner chamber 116.

The gaseous media supply 135 can be any conventional gas supply that can be used for letting in air, sterilized air or another food graded gas into the inner chamber 116. The upper end valve 132 is also connected to a second liquid output 130, allowing it to route liquid out from the inner chamber 116 to a second liquid output 130, for example when a cleaning liquid shall be fed through the inner chamber 116 from the fluid line 102. The second liquid output 130 may be a drain that can receive cleaning liquid that is fed through the inner chamber 116. A line connecting valve 126 connects a lower end 108 of the inner chamber 116 to the fluid line 102. The gaseous media supply 135 may be the same unit as the second liquid output 130. This is because air can be drawn into the inner chamber 116 via the liquid output.

The vessel 104 has a jacket 110 that has a liquid inlet 112 and a liquid outlet 114. The liquid inlet 112 is connected to the fluid line 102 to receive liquid product P from the fluid line 102, pass the liquid product P through the jacket 110, further to the outlet liquid outlet 114 where it leaves the vessel 104. The liquid outlet 114 is connected to the fluid line 102, such that the liquid product P thereby continues to flow in the fluid line 102 after it has passed the jacket 110.

One damper arrangement may suffice to suppress pressure fluctuations in the fluid line 102. However, it may be beneficial to use two damper arrangements. The damper arrangements then form a first damper arrangement 100 and a second damper arrangement 100'. The damper arrangements 100, 100' may be identical but for how they are arranged in the fluid line 102.

In the illustrated embodiment, the fluid line 102 has, as seen in a flow direction of the liquid product P, a first section 102a, a second section 102b, a third section 102c and a fourth section 102d. The first section 102a is connected to the liquid inlet 112 of the jacket 110 of the first damper arrangement 100. The second section 102b is connected from the liquid outlet 114 of the jacket 110 of the first damper arrangement 100, to the liquid inlet 112 of the jacket 110 of the second damper arrangement 100'. The third section 102c is connected from the liquid outlet 114 of the jacket 110 of the second damper arrangement 100', to the inlet 203 of the homogenizer 200. The fourth section 102d is connected to the outlet 203 of the homogenizer 200. The inner chamber 116 of the first damper arrangement 100 is connected to the fourth section 102d for damping pressure pulsation downstream the homogenizer 200. The inner chamber 116 of the second damper arrangement 100' is connected to the third section 102c for damping pressure pulsation upstream the homogenizer 200. The first section 102a receives the liquid product P from any suitable upstream liquid processing equipment. The fourth section 102d conveys the liquid product P to downstream processing equipment that is appropriate for continued handling of the liquid product P.

The homogenizer 200 forms together with the fluid line 102 and one or both of the damper arrangements 100, 100' a homogenizer arrangement 1.

When the homogenizer 200 is operated the line connecting valve 126 should be open. Liquid product P can then enter the inner chamber 116 of the vessel 104. A gaseous pocket 109, typically having the form of an air filled pocket, is present in the upper part of the inner chamber 116. When pressure fluctuates in the fluid line 102, these fluctuations are absorbed by the gaseous pocket 109 since the gaseous media (air) in the pocket can be compressed and expanded in response to the fluctuations. This is a known principle within the technical field of pulsation dampers.

Over time, as liquid product P flow in the fluid line 102, some of the gaseous media in the pocket 109 is mixed with the liquid product P. When this happens, the volume of the gaseous pocket 109 gradually decreases and the liquid product P rise higher and higher in the inner chamber 116. For this reason, the inner chamber 116 must be emptied of liquid product P, such that new air can enter the inner chamber 116, allowing the gaseous pocket 109 to regain its size and thereby its capacity for damping pressure fluctuations.

Corresponding situation applies to the second damper arrangement, which has its inner chamber fluidly connected to the third section 102c.

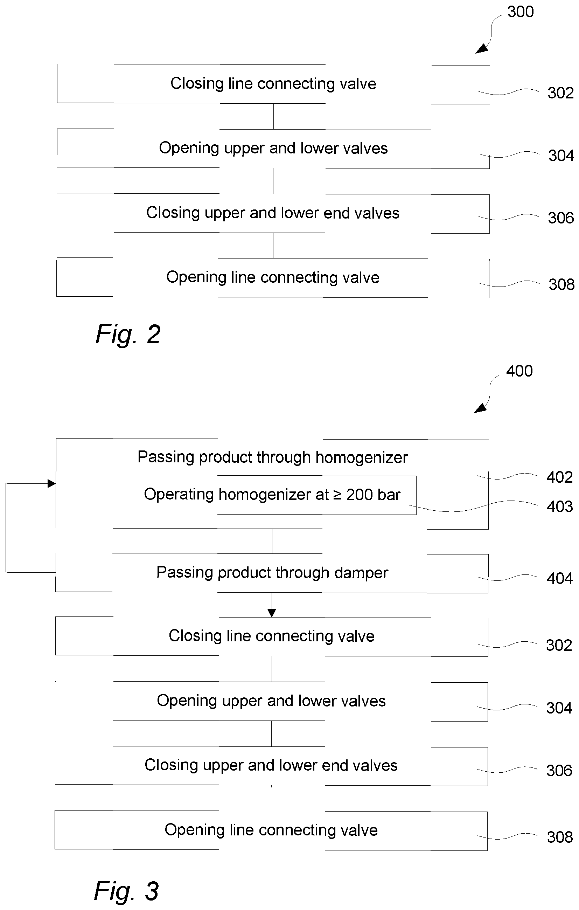

With further reference to Fig. 3, the method 300 of replacing liquid product P in the inner chamber 116 with a gaseous medium may be conducted concurrently with a method 400 of operating the homogenizer arrangement 1. In this method, liquid product P is passed 402 through the homogenizer 200 while simultaneously passing 404 the same liquid product P through the damper arrangement 100. The liquid product P that is processed through both the homogenizer 200 and the damper arrangement 100 originates from the same stream. Specifically, a certain volume of the liquid product P first passes through the homogenizer 200 and subsequently through the damper arrangement 100, assuming the damper arrangement 100 is positioned downstream of the homogenizer 200. Nonetheless, it is the same volume of liquid product P that passes both the homogenizer 200 and the damper arrangement 100. When utilizing two damper arrangements, the same volume of liquid product P flows through both dampers and the homogenizer 200, albeit at different times.

The passing 402 of liquid product P through the homogenizer 200 preferably involves operating 403 the homogenizer at a pressure of at least 200 bar. The pressure can be increased to 300 bar, 400 bar, or even higher, which effectively homogenizes many liquid products, including those produced for human consumption.

As indicated, the steps 402, 404 of passing the liquid product P through the homogenizer 200 and the damper arrangement 100 are performed until all the liquid product P intended for homogenization has been processed. At regular intervals, during the period when liquid product P is still being passed through the homogenizer 200 and the jacket 116 of the damper arrangement 100, the steps 302, 304, 308 in the method 300 for replacing liquid product P in the inner chamber 116 with a gaseous medium are carried out. Thus, the inner chamber 116 is refilled with air simultaneously with the homogenization of the liquid product P. During the time it takes to refill the inner chamber 116 of a damper arrangement 100 with air, the damper arrangement does not reduce pressure fluctuations. However, tests have shown that this does not increase the risk of damage due to pressure pulsations, as the refilling process can be completed very quickly.

Refilling, or performing the method 300, can be scheduled at regular intervals based on an understanding of how quickly the gaseous medium is "consumed". This timing can vary based on several factors, such as pressure levels, the type of homogenizer 200, the type of liquid product, etc., and may be empirically determined.

Additionally or alternatively, a level sensor 148 can be installed to detect whether the liquid product P inside the inner chamber 116 exceeds a certain predetermined level. If such detection occurs, the refilling method 300 is initiated. The level sensor 148 can be any conventional sensor capable of determining if a liquid is above a specific level in a vessel.

The level sensor 148 may be connected to a control device 136, which is configured to control the operation of the homogenizer arrangement 1. The control device 136 may be implemented by hardware or a combination of software and hardware. In the illustrated example, the control device 136 comprises processor circuitry 231, computer memory 232 and a signal interface 233. The processor circuitry 231 may, for example, include one or more of a CPU ("Central Processing Unit"), a DSP ("Digital Signal Processor"), a microprocessor, a microcontroller, an ASIC ("Application-Specific Integrated Circuit"), a combination of discrete analog and/or digital components, or some other programmable logical device, such as an FPGA ("Field Programmable Gate Array"). A control program comprising computer instructions (program instructions) may be stored in the memory 232 and executed by the processor circuitry 231 to perform methods and procedures 300, 400 as described herein. The control program may be supplied to the control device 136 on a computer-readable medium, which may be a tangible (non-transitory) product (e.g. magnetic medium, optical disk, read-only memory, flash memory, etc.) or a propagating signal. The signal interface 233 may be configured in accordance with conventional practice to receive input signals and provide output signals. In the illustrated example, the control device 136 is further connected to a feedback device 234 which is configured to generate audible and/or visible feedback to an operator of the station 2. For example, the feedback device 234 may comprise one or more of a display, an indicator lamp, a speaker, a siren, etc.

The operations of the valves 126, 128, 132, and the homogenizer 200 are controlled by control signals from the control device 136, represented by C1 to C4. The sensor input provided to the control device 136 by the level sensor 148 is represented by the input signal S1.At regular intervals, the homogenizer arrangement 1 is cleaned by performing a cleaning-in-place (CIP) process. Essentially, this method involves passing a CIP liquid through the fluid line, through the jacket(s) of the damper arrangement(s), and through the homogenizer. At some point during the CIP process, all valves 126, 128, 132 are opened, allowing the CIP liquid to flow through the inner chamber 116 and out to the liquid outputs 129, 130. This effectively cleans the valves and the inner chamber. A final step of the CIP process may involve passing steam through the homogenizer arrangement 1, in a manner similar to the CIP liquid, to effectively sterilize the arrangement. When cleaning is complete, the homogenizer arrangement 1 can be set to perform homogenization of a liquid product.

The vessels 104 of the damper arrangement 100 may be directly connected to the homogenizer 200 and may take the form of a jacketed, vertically arranged tube.

From the description above, it is evident that, although various embodiments of the invention have been described and illustrated, the invention is not limited to these embodiments. Instead, it can be embodied in other ways within the scope of the subject matter defined in the subsequent claims.

## Claims

1. A damper arrangement (100) for reducing pressure pulsations in a fluid line (102) filled with a liquid product (P), the damper arrangement (100) comprising a vessel (104) having an inner chamber (116),
an upper end valve (132) that connects an upper end (106) of the inner chamber (116) to a gaseous media supply (135),
a lower end valve (128) that connects a lower end (108) of the inner chamber (116) to a liquid output (130),
a line connecting valve (126) that connects the lower end (108) of the inner chamber (116) to the fluid line (102),
the upper end valve (132), the lower end valve (128) and the line connecting valve (126) being operable to drain liquid product (P) the inner chamber (116) from liquid product and form a pressure absorbing gaseous pocket (109) inside the inner chamber (116), **wherein**
the vessel (104) comprises a jacket (110) that has a liquid inlet (112) and a liquid outlet (114) for passing the liquid product (P) through the jacket (110).

2. The damper arrangement (100) according to any preceding claim, comprising a control device (136) that is communicatively connected to the upper end valve (132), the lower end valve (128) and the line connecting valve (126), and configured to control
the line connecting valve (126) to close,
the upper end valve (132) and the lower end valve (128) to open, such that liquid product (P) is drained from the inner chamber (116) while gaseous media enters the inner chamber (116),
the upper end valve (132) and the lower end valve (128) to close, and
the line connecting valve (126) to open, for fluidly connecting the liquid product in the fluid line (102) with gaseous media in the inner chamber (116).

3. The damper arrangement (100) according to any preceding claim, wherein the liquid inlet (112) of the jacket (110) is connected to the fluid line (102), for letting liquid product (P) into the jacket (110).

4. The damper arrangement (100) according to any preceding claim, wherein the liquid outlet (114) of the jacket (110) is connected to the fluid line (102), for letting liquid product (P) out from the jacket (110).

5. The damper arrangement (100) according to any preceding claim, wherein the jacket (110) is an integral part of the fluid line (102).

6. The damper arrangement (100) according to any preceding claim, wherein the jacket (110) and the fluid line (102) form a common fluid conduit interior channel.

7. The damper arrangement (100) according to any preceding claim, wherein the lower end valve (128) and the line connecting valve (126) are formed as a unified valve.

8. The damper arrangement (100) according to any preceding claim, comprising a sensor (148) connected to the inner chamber (116) and arranged to generate a signal indicative of a level of liquid product (P) that is present inside the chamber (116).

9. A homogenizer arrangement (1) comprising
a damper arrangement (100) according to any preceding claim,
a homogenizer (200), and
a fluid line (102), wherein
the damper arrangement (100) and the homogenizer (200) are connected to the fluid line (102) for passing liquid product (P) through the jacket (110) of the damper arrangement (100) and through the homogenizer (200).

10. The homogenizer arrangement (1) according to claim 9, wherein the damper arrangement (100) is a first damper arrangement (100), the homogenizer arrangement (1) comprising
a second damper arrangement (100') according to any of claims 1 - 8, wherein
the first damper arrangement (100) is connected to the fluid line (102) downstream the homogenizer (200), and the second damper arrangement (100') is connected to the fluid line (102) upstream the homogenizer for passing liquid product (P) through the jacket (110) of the second damper arrangement.

11. The homogenizer arrangement (1) according to claim 9 or 10, wherein the homogenizer (200) is configured to receive liquid product (P) from the fluid line (102), and is arranged to operate at a pressure of at least 200 bar for homogenizing the liquid product (P), while simultaneously the upper end valve (132), the lower end valve (128) and the line connecting valve (126) are controlled such that liquid product is drained from the inner chamber (116) while gaseous media enters the inner chamber (116).

12. A method (300) of operating a damper arrangement (100) that is connected to a fluid line (102), the method (300) comprising
passing liquid product (P) through a fluid line (102) while providing fluid communication between the fluid line (102) and an inner chamber (116) of the damper arrangement (100),
blocking said fluid communication between the fluid line (102) and the inner chamber (116),
providing fluid communication between an upper end of the inner chamber (116) and a gaseous media supply (135),
providing fluid communication between a lower end of the inner chamber (116) and a liquid output (129), to thereby drain liquid product (P) from the inner chamber (116) such that gaseous media enters the inner chamber (116), and
passing the liquid product (P) through a jacket (110) that at least partially surrounds the inner chamber (116).

13. A method (400) of operating a homogenizer arrangement (1) that comprises a damper arrangement (100), a fluid line (102) and a homogenizer (200) for homogenizing a liquid product (P), the method (400) comprises
passing the liquid product (P) through the homogenizer (200),
passing the liquid product (P) through the fluid line (102) while providing fluid communication between the fluid line (102) and an inner chamber (116) of the damper arrangement (100),
blocking said fluid communication between the fluid line (102) and the inner chamber (116),
providing fluid communication between an upper end of the inner chamber (116) and a gaseous media supply (135),
providing fluid communication between a lower end of the inner chamber (116) and a liquid output (129), to thereby drain liquid product (P) from the inner chamber (116) such that gaseous media enters the inner chamber (116), and
passing the liquid product (P) through a jacket (110) that at least partially surrounds the inner chamber (116).

14. The method (400) according to claim 13, wherein the liquid product (P) is continuously passed through the homogenizer (200) and the jacket (116) of the damper arrangement (100), such that the liquid product (P) is homogenized.
